**Europäisches Patentamt**

**European Patent Office**

**Office européen des brevets**

(19)

(11) Numéro de publication: **0 318 409**

**A1**

(12)

# DEMANDE DE BREVET EUROPEEN

(21) Numéro de dépôt: **88460027.1**

(51) Int. Cl.⁴: **H 05 B 3/30**

(22) Date de dépôt: **27.10.88**

(30) Priorité: **27.11.87 FR 8716684**

(43) Date de publication de la demande:
**31.05.89 Bulletin 89/22**

(84) Etats contractants désignés:
**AT BE CH DE ES GB GR IT LI LU NL SE**

(71) Demandeur: **SOCIETE GERAULT SARL**
**Bourg de Visseiche**
**F-35130 Visseiche (FR)**

(72) Inventeur: **Gerault, Roger**
**Le Bourg de Visseiche**
**F-35130 Visseiche (FR)**

(74) Mandataire: **Le Guen, Louis François**
**CABINET Louis LE GUEN 38, rue Levavasseur B.P. 91**
**F-35802 Dinard Cédex (FR)**

(54) **Panneau de chauffage électrique par rayonnement.**

(57) Le panneau comprend un élément plat chauffant (1) appliqué sur une plaque de rayonnement (2), avec une couche thermiquement isolante (3) derrière l'élément plat chauffant (1). L'ensemble est monté dans un châssis (4) en forme de bac plat.

L'élément plat chauffant (1) est constitué d'un circuit résistant imprimé (6) sur une couche mince isolante (5). La face non isolée du circuit résistant (6) est recouverte d'une couche mince de matériau élastomère (7) isolant électriquement, tel que du caoutchouc siliconé. La couche isolante arrière (3) est en fibres isolantes tassées, par exemple en laine de verre tassée. Le matériau de la plaque rayonnante (2) est en aluminium rigide.

Le panneau est particulièrement destiné à être utilisé horizontalement, par exemple dans des bâtiments d'élevage.

FIG. UNIQUE

EP 0 318 409 A1

# Description

## Panneau de chauffage électrique par rayonnement

La présente invention concerne un panneau de chauffage électrique par rayonnement, qui est plus particulièrement destiné à être utilisé horizontalement, par exemple dans des bâtiments d'élevage.

Un panneau rayonnant connu du type mentionné ci-dessus comporte une résistance électrique imprimée et répartie, le plus uniformément possible, sur un substrat ayant pratiquement les dimensions du panneau. Devant le substrat portant la résistance est disposée une plaque en matériau isolant électrique, tel que de la bakélite ou une résine phénolique, qui est destinée à soutenir le substrat et à répartir plus uniformément le rayonnement. Derrière le substrat portant la résistance est prévue une couche mince de protection du conducteur métallique de la résistance derrière laquelle est encore prévue une couche de matériau mauvais conducteur de la chaleur, tel que de la laine de verre. L'ensemble est monté dans un châssis qui porte la plaque sur laquelle repose ainsi le substrat et sur lequel se trouve la laine de verre. Le châssis est muni de disposifs d'accrochage permettant de la suspendre horizontalement et il présente les passages nécessaires à l'alimentation de la résistance électrique.

En pratique, le substrat est en mylar de quelques micronmètres d'épaisseur sur lequel on sait déposer une alliage adéquate constituant la résistance électrique. La couche mince protégeant la résistance est par exemple collée pour former avec le substrat un sandwich protecteur. Cette couche mince est généralement également en mylar. Quand la résistance fonctionne et s'échauffe, les segments qui la constituent se dilatent en étirant le substrat. Comme le mylar n'a que des priorétés mécaniques faibles notamment à haute température, il perd rapidement ses qualités élastiques et, quand on arrête le chauffage, il a tendance à former des ondulations sous la force de rétraction des segments de la résistance. Il en résulte qu'à une mise en route ultérieure, certains points du substrat ne sont plus en contact avec la plaque avant. Aux endroits décollés de la plaque, l'évacuation de la chaleur n'est plus assurée et on y atteint des températures trop élevées avec des coupures de résistance.

Un objet de la présente consiste à remédier à cet inconvénient en prévoyant des moyens pour maintenir l'élément chauffant plan et bien appliqué contre la plaque rayonnante.

Suivant une caractéristique de l'invention, il est prévu un élément chauffant plat constitué d'un circuit résistant imprimé sur une couche mince isolante, la face non isolée du circuit résistant étant recouvert d'une couche mince de matériau élastomère isolant électriquement.

Suivant une autre caractéristique, le matériau élastomère est du caoutchouc, par exemple du caoutchouc siliconé.

Suivant une autre caractéristique, la couche isolante arrière est en fibres isolantes tassées, par exemple en laine de verre tassée.

Suivant une autre caractéristique, le matériau de la plaque rayonnante est en aluminium rigide.

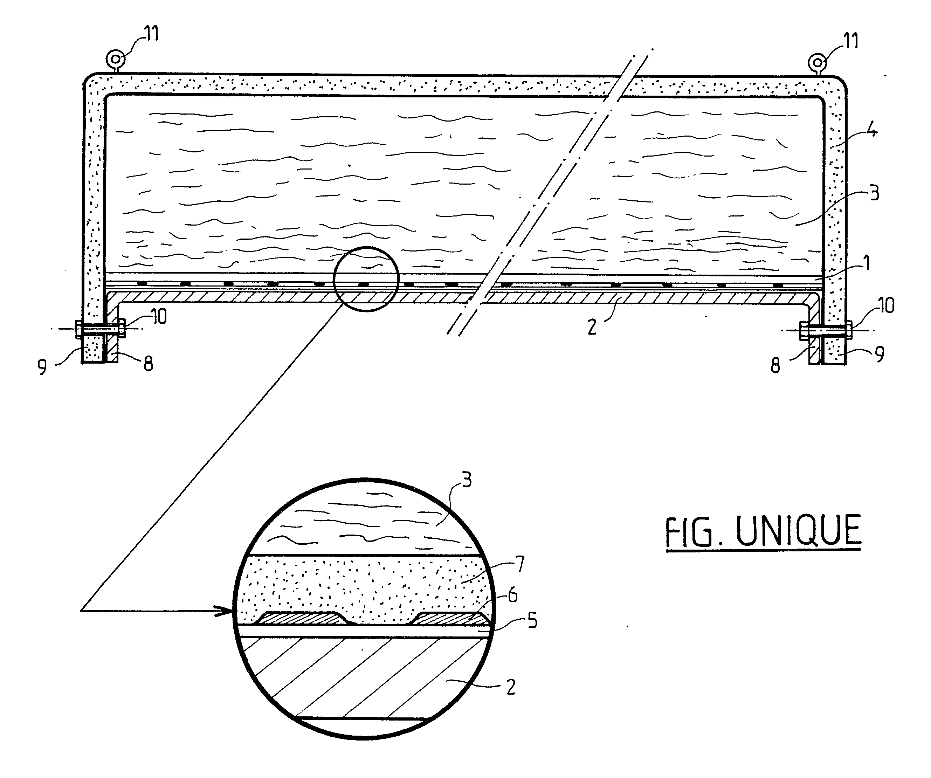

Les caractéristiques de l'invention mentionnées ci-dessus, ainsi que d'autres, apparaîtront plus clairement à la lecture de la description suivante d'un exemple de réalisation, ladite description étant faite en relation avec la Figure unique du dessin joint qui est une coupe verticale d'un panneau de chauffage suivant l'invention.

La coupe de la Fig. unique montre un élément chauffant 1 appliqué derrière une plaque plane et rigide 2 par l'action d'une couche isolante 3, l'ensemble étant contenu dans un châssis rigide 4.

Comme le montre la vue agrandie, l'élément chauffant 1 se compose d'une couche de mylar 5, sur laquelle est imprimée par des moyens et une méthode connus un circuit résistant 6, dont on a montré quelques segments, et d'une couche de caoutchouc siliconé 7 qui recouvre la face arrière du circuit résistant 6 et qui est collée contre la face arrière de la couche de mylar 5.

La face avant de la couche de mylar 5 est en contact intime avec la face arrière de la plaque 2 qui est en aluminium, ou plutôt en alliage d'aluminium, tel que l'alliage normalisé NH4 qui est un alliage rigide. L'épaisseur de la plaque d'aluminium 2 est de l'ordre de 2 mm. Sur les côtés, la plaque 2 a ses rebords 8 rabattus vers l'avant.

Derrière la couche de caoutchouc 7, la couche thermiquement isolante 3 est formée, par exemple, de laine de verre. Toujours à titre d'exemple, on peut partir d'une couche de laine de verre dont l'épaisseur normale est de 10 cm et la comprimer jusqu'à lui donner une épaisseur de 4 cm, qui est la distance prévue en la face arrière de la couche 7 et le fond du châssis 4. Ainsi, l'élasticité de la laine de verre comprimée applique bien l'élément chauffant sur la plaque d'aluminium.

Le châssis 4 est, par exemple, en polyester moulé en forme de bac dont les rebords 9 sont reliés aux rebords 8 de la plaque 2 par des moyens vis-écrous 10. Sur sa face supérieure, le châssis 4 comporte un anneau 11 à chaque coin permettant de le suspendre. Il comporte de préférence des renflements allongés, non montrés, lui assurant une meilleure rigidité. Enfin, la plaque 2 est, de préférence, revêtue d'une peinture mate.

Comme on l'a mentionné dans le préambule de la présente description, la couche de caoutchouc 7 ramène le circuit résistant 6 à ses dimensions initiales après chaque dilation au cours du chauffage, si bien que la couche de mylar 5 subit moins de fatigues et ne tend pas à se gondoler. Par ailleurs, la couche isolante tassée 3 maintient l'élément chauffant bien plan au cours de ses dilations et contractions. Enfin, la plaque d'aluminium 2 est meilleure conductrice que la bakélite ou des produits semblables ce qui entraîne moins de pertes. A noter que les rebords 8 et 9 contribuent à limiter les pertes par convection.

Dans l'exemple de réalisation montré, les rebords 8 sont tournés vers l'extérieur, mais ils pourraient tout aussi bien être tournés vers l'intérieur, le rebord 9 tourné vers l'extérieur continuant à limiter les pertes par convection.


**Revendications**

1) Panneau de chauffage électrique par rayonnement, qui est plus particulièrement destiné à être utilisé horizontalement, par exemple dans des bâtiments d'élevage, comprenant un élément plat chauffant (1) appliqué sur une plaque de rayonnement (2), avec une couche thermiquement isolante (3) derrière l'élément plat chauffant (1), l'ensemble étant monté dans un châssis (4) en forme de bac plat, caractérisé en ce que l'élément plat chauffant (1) est constitué d'un circuit résistant imprimé (6) sur une couche mince isolante (5), la face non isolée du circuit résistant (6) étant recouverte d'une couche mince de matériau élastomère (7) isolant électriquement.

2) Panneau de chauffage suivant la revendication 1, caractérisé en ce que le matériau élastomère est du caoutchouc, par exemple du caoutchouc siliconé.

3) Panneau de chauffage suivant la revendication 1 ou 2, caractérisé en ce que la couche isolante arrière (3) est en fibres isolantes tassées, par exemple en laine de verre tassée.

4) Panneau de chauffage suivant l'une des revendications 1 à 3, caractérisé en ce que le matériau de la plaque rayonnante (2) est en aluminium rigide.

FIG. UNIQUE

EP 0 318 409 A1

Office européen
des brevets

RAPPORT DE RECHERCHE EUROPEENNE

Numero de la demande

EP 88 46 0027

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | US-A-3 020 379 (LUDLOW et al.) <br> * Colonne 2, lignes 3-42; figure 2 * | 1 | H 05 B 3/30 |
| A | --- | 4 | |
| Y | US-A-3 060 300 (HORNER) <br> * Colonne 3, lignes 32-56; figures 8,9 * | 1 | |
| A | --- | 2 | |
| A | US-A-4 471 212 (HAGER, Jr.) <br> * Colonne 1, ligne 58 - colonne 2, ligne 55; figure 1 * | 1,3,4 | |
| A | FR-A-2 244 142 (DRG PACKAGING) <br> --- | | |
| A | FR-A-1 195 162 (NAPIER & SON) <br> ----- | | |

DOMAINES TECHNIQUES
RECHERCHES (Int. Cl.4)

H 05 B 3/00
F 24 D 13/00

Le présent rapport a été établi pour toutes les revendications

| Lieu de la recherche | Date d'achèvement de la recherche | Examinateur |
|---|---|---|
| LA HAYE | 03-03-1989 | RAUSCH R.G. |

EPO FORM 1503 03.82 (P0402)